Europäisches Patentamt

European Patent Office

Office européen des brevets

(11) Veröffentlichungsnummer: **0 369 047**
**A1**

## (12) EUROPÄISCHE PATENTANMELDUNG

(21) Anmeldenummer: 88119040.9

(22) Anmeldetag: 15.11.88

(51) Int. Cl.5: **H04L 7/02, H04L 7/033**

(43) Veröffentlichungstag der Anmeldung:
23.05.90 Patentblatt 90/21

(84) Benannte Vertragsstaaten:
AT BE CH DE ES FR GB GR IT LI NL SE

(71) Anmelder: **Siemens Aktiengesellschaft**
**Wittelsbacherplatz 2**
**D-8000 München 2(DE)**

(72) Erfinder: **Sarközi, Imre, Dipl.-Ing.**
**Karl-Witthalm-Strasse 42**
**D-8000 München 70(DE)**

(54) **Anordnung zur Umschaltung eines Taktes auf einen Takt gleicher Frequenz aber nacheilender Taktphase.**

(57) Bei hohen Schaltgeschwindigkeiten können in integrierten Umschaltanordnungen Schaltvorgänge zeitlich unzureichend koordiniert werden. Bei Umschaltungen dadurch entstehende Spikes sollen vermieden werden.

Die Umschaltanordnung besteht aus einer Steuerlogik (1), einer Taktüberwachung (2) und einem Taktselektor (3). Die Steuerlogik (1) enthält ein Schieberegister mit Registerzellen (Z1 bis Zn), die abgesehen von der ersten alle gleich sind. Die gleichen weisen ein D-Flipflop (H2 bis Hn) auf, in dem durch Zwischenspeicherung eines Steuersignals (St1 bis Stn-1) ein Vorsteuersignal (St2* bis Stn*) gebildet wird. In der ersten Registerzelle (Z1) entsteht ein Vorsteuersignal (St1*), wenn alle anderen (St2* bis Stn*) fehlen. Die Umschaltung erfolgt in Abhängigkeit von einem Korrektursignal (K) und den Takten an den betroffenen Registerzellen derart, daß zuerst das bisherige Steuersignal abgeschaltet wird, ehe das neue Steuersignal eingeschaltet wird. Im Taktselektor (3) schaltet das aktive Steuersignal den zugeordneten Takt als Daten-Hilfstakt (DHT) durch. Die Taktüberwachung (2) erzeugt ein Startsignal (Sta), wenn fälschlich kein oder gleichzeitig mehrere Steuersignale (aus St1 bis Stn) gebildet wurden.

Die Anordnung ist bei der Taktrückgewinnung in Digitalsignal-Multiplexgeräten verwendbar.

FIG 5a

FIG 5b

EP 0 369 047 A1

## Anordnung zur Umschaltung eines Taktes auf einen Takt gleicher Frequenz aber nacheilender Taktphase

Die Erfindung bezieht sich auf eine Anordnung in integrierter Schaltkreistechnik zur Umschaltung eines Taktes aus n untereinander gleichen Phasenabstand und gleiche Frequenz aufweisenden Takten auf einen Takt nacheilender Taktphase mit Steuersignalen aus n Registerzellenausgängen eines von einem Korrektursignal getakteten Schieberegisters aus n Registerzellen mit jeweils einem Speicherelement.

Eine Anordnung der einleitend geschilderten Art, jedoch für eine Umschaltung eines Taktes auf einen Takt voreilender Taktphase, ist Gegenstand eines älteren Vorschlags (88116125.1). Nach diesem enthält eine Umschaltanordnung einen Schieberegisterring aus Registerzellen. Jede von diesen enthält ein D-Flipflop, das über ein ODER-Gatter in sich selbst und über ein dem Rücksetzeingang vorgeschaltetes weiteres ODER-Gatter mit allen anderen Registerzellen mit Ausnahme der in Schieberichtung vorangehenden rückgekoppelt ist. Dadurch wird erreicht, daß im Schieberegisterring jeweils nur bei einer Registerzelle ein "H"-Zustand auftreten kann. Eine Taktüberwachung startet den Schieberegisterring bei Betriebaufnahme und dann erneut, wenn infolge einer Störung keine der Registerzellen ein Steuersignal abgibt.

Aus der Europäischen Offenlegungsschrift 0 275 406 A1 ist ein Verfahren und eine Anordnung zur Rückgewinnung des Taktes und/oder der Taktphase eines synchronen oder plesiochronen Digitalsignals bekannt. Die Anordnung enthält einen Hilfstakterzeuger, der Hilfstakte gleicher Frequenz aber unterschiedlicher Phasenlage erzeugt. Von diesen wird in einer Phasenkorrektureinrichtung einer als Daten-Hilfstakt bzw. zurückgewonnener Takt ausgewählt. Diese Hilfstakte weichen in ihrer Frequenz prinzipiell von der des zu bildenden Daten-Hilfstaktes ab. Ein Phasensensor prüft, ob sich die wirksamen Flanken des Digitalsignals und des Daten-Hilfstaktes auf weniger als einen definierten Zeitabstand genähert haben und gibt, sobald dies der Fall ist, ein Korrektursignal ab. Dieses veranlaßt in der Phasenkorrektureinrichtung eine Phasenverschiebung des Daten-Hilfstakts durch Umschalten zwischen den abgeleiteten Hilfstakten.

Nach einem anderen älteren Vorschlag (P 38 09 606.4) kann die Phase eines binären Datensignals fortlaufend an einen zentralen Takt angepaßt werden. Hierbei wird durch Abtakten des Datensignals mit Hilfstakten eine Folge von Hilfs-Datensignalen erzeugt, die untereinander gleiche Phasenabstände und die Frequenz des zentralen Taktes aufweisen und von denen einer als angepaßtes Datensignal dient. Die Auswahl dieses Datensignals und damit der Phase erfolgt so, daß bei der Abtaktung Impulsbreitenverzerrungen und Jitter des Datensignals keine Wirkung zeigen.

Ein weiterer älterer Vorschlag (P 38 14 640.1) befaßt sich ebenfalls mit einem Verfahren und einer Anordnung zur Taktrückgewinnung aus einem Datensignal durch fortlaufende Anpassung eines örtlich erzeugten Taktes an ein Datensignal. Auch hier erzeugt ein Hilfstakterzeuger eine Folge von Hilfstakten. Diese weisen dieselbe oder die der in positiver oder negativer Richtung etwas abweichenden Bitrate des Datensignals entsprechende Frequenz und untereinander gleiche Phasenabstände auf. Ein Phasendetektor vergleicht das Datensignal mit den Hilfstakten und eine Steuerlogik wählt über einen Umschalter einen von diesen als Takt aus. Es wird der Hilfstakt ausgewählt, auf den synchron und spikefrei umgeschaltet werden kann.

Der Erfindung liegt die Aufgabe zugrunde, eine Anordnung für eine Umschaltung eines Taktes auf einen anderen gleicher Frequenz und nacheilender Taktphase anzugeben. Diese Anordnung soll integriert ausführbar sein, mit hohen Schaltgeschwindigkeiten arbeiten können, spikefrei umschalten und für manche Anwendungsfälle einfacher als die nach dem letztgenannten älteren Vorschlag sein.

Integrierte Schaltungen weisen von Exemplar zu Exemplar unterschiedliche Schaltgeschwindigkeiten ihrer aktiven Elemente auf, die noch durch Temperatur- und Versorgungsspannungsschwankungen weiter beträchtlich variieren. Die Schaltungskonfiguration bedingt weiter unterschiedliche Leitungslängen zwischen zusammenwirkenden aktiven Elementen. Bei hohen Bitraten können die Schaltvorgänge aus den vorstehend genannten Gründen zeitlich nicht ausreichend genau koordiniert werden, so daß bei einer Umschaltung Spikes entstehen.

Die Lösung dieser Aufgabe erfolgt erfindungsgemäß mit den Merkmalen des Patentanspruchs 1.

Während die Lösung nach dem letztgenannten älteren Vorschlag eine vollständige Taktrückgewinnung beinhaltet, die auf dem Prinzip der Steuerung beruht, handelt es sich bei der erfindungsgemäßen Lösung lediglich um eine Phasenkorrektureinrichtung, die in einer Taktrückgewinnung verwendbar ist, die das Prinzip der Regelung benutzt. Diese Phasenkorrektureinrichtung benötigt lediglich ein Korrektursignal und schaltet nur in einer Richtung weiter.

Die Erfindung läßt sich in vorteilhafter Weise in CMOS-Technologie realisieren und ist insbesondere für Bitraten gleich oder größer 34 Mbit/s geeignet.

Anhand von Ausführungsbeispielen wird die Erfindung nachstehend näher erläutert.

Fig. 1 zeigt ein Prinzip-Blockschaltbild der erfindungsgemäßen Anordnung,

Fig. 2 zeigt einen Pulsplan von vier gegeneinander phasenverschobenen Takten,

Fig. 3 zeigt einen Pulsplan zur Erläuterung der Spikeentstehung,

Fig. 4 zeigt ein D-Flipflop mit Testeingängen,

Fig. 5a zeigt ein Schaltbild der erfindungsgemäßen Steuerlogik mit Taktselektor,

Fig. 5b zeigt ein Schaltbild der erfindungsgemäßen Taktüberwachung,

Fig. 6 zeigt ein praktisches Ausführungsbeispiel der Erfindung und

Fig. 7 zeigt einen Pulsplan zum Ausführungsbeispiel.

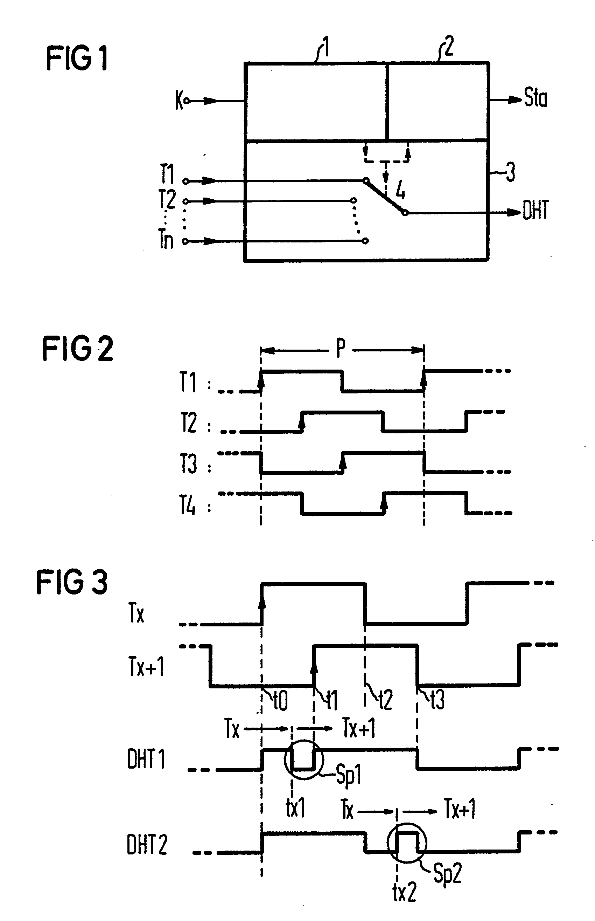

Fig. 1 zeigt das Prinzip-Blockschaltbild der erfindungsgemäßen Anordnung. Diese enthält eine Steuerlogik 1, eine Taktüberwachung 2 und einen Taktselektor 3 mit Umschalter 4.

An den Umschalter 4 werden Takte T1 - Tn angelegt, die gleiche Frequenz und in ihrer Folge gleiche Phasenabstände aufweisen. Der Umschalter 4 vermag einen dieser Takte durchzuschalten, der dann Daten-Hilfstakt DHT genannt wird. Mit einem Korrektursignal K kann der Steuerlogik 1 der Befehl erteilt werden, den Umschalter 4 von einem gegenwärtig durchgeschalteten Takt Tx auf den gegenüber diesem phasenmäßig nacheilenden Takt Tx + 1 umzuschalten. Die Taktüberwachung 2 vermag einmal die Anordnung erstmals mit einem Startsignal Sta zu starten; andererseits überprüft sie, ob tatsächlich nur einer der Takte T1 - Tn durchgeschaltet ist, und startet - wenn nicht - die Anordnung erneut mit einem gleichen Startsignal Sta.

Fig. 2 zeigt vier Takte T1 bis T4 (n = 4) und deren phasenmäßige Verschiebung gegeneinander während einer Periode P.

Fig. 3 zeigt einen Pulsplan zur Erläuterung der Umschaltung von einem Takt Tx auf einen Takt Tx + 1. Anhand von zwei Daten-Hilfstakten DHT1 und DHT2 werden zwei Fälle der Umschaltung erläutert. Mit dem Zeitpunkt t0 beginnend, weisen beide Daten-Hilfstakte DHT1 und DHT2 wie der Takt Tx einen "H"-Zustand (high) auf.

Erfolgt die Umschaltung auf den Takt Tx + 1 zum Zeitpunkt tx1, dann nimmt der Daten-Hilfstakt DHT1 wie der Takt Tx + 1 einen "L"-Zustand (low) an, der bis zum Zeitpunkt t1 währt, bei dem der Takt Tx + 1 und damit der Daten-Hilfstakt DHT1 wieder in den "H"-Zustand übergeht. Die Impulspause zwischen den Zeitpunkten tx1 und t1 ist ein Spike Sp1.

Im zweiten Fall hat der Daten-Hilfstakt DHT2 nach dem Zeitpunkt t2 wie der Takt Tx einen "L"-Zustand. Dieser währt bis zum Umschaltzeitpunkt tx2, bei dem der Daten-Hilfstakt DHT2 wie der Takt Tx + 1 in einen "H"-Zustand übergeht, der bis zum Zeitpunkt t3 anhält. Der Impuls des Daten-Hilfstaktes DHT2 zwischen den Zeitpunkten tx2 und t3 ist ein Spike Sp2.

Eine spikefreie Umschaltung läßt sich dadurch erreichen, daß die beiden Takte Tx und Tx + 1 im Gegensatz zu diesem Beispiel nicht gleichzeitig geschaltet werden, sondern die Abschaltung des Taktes Tx zum Zeitpunkt t2 nach Beendigung seines "H"-Zustandes und die Einschaltung des Taktes Tx + 1 zum Zeitpunkt t3 nach Beendigung seines "H"-Zustandes ausgelöst wird. Die Schaltvorgänge können somit eine halbe Periode bis zum Periodenende dauern. Zwischen den Zeitpunkten t2 und t3 sind beide Takte Tx und Tx + 1 abgeschaltet, wodurch im Daten-Hilfstakt DHT der "L"-Zustand um eine Viertel Periode zum Zeitpunkt t2 bis zum Zeitpunkt t3 verlängert wird.

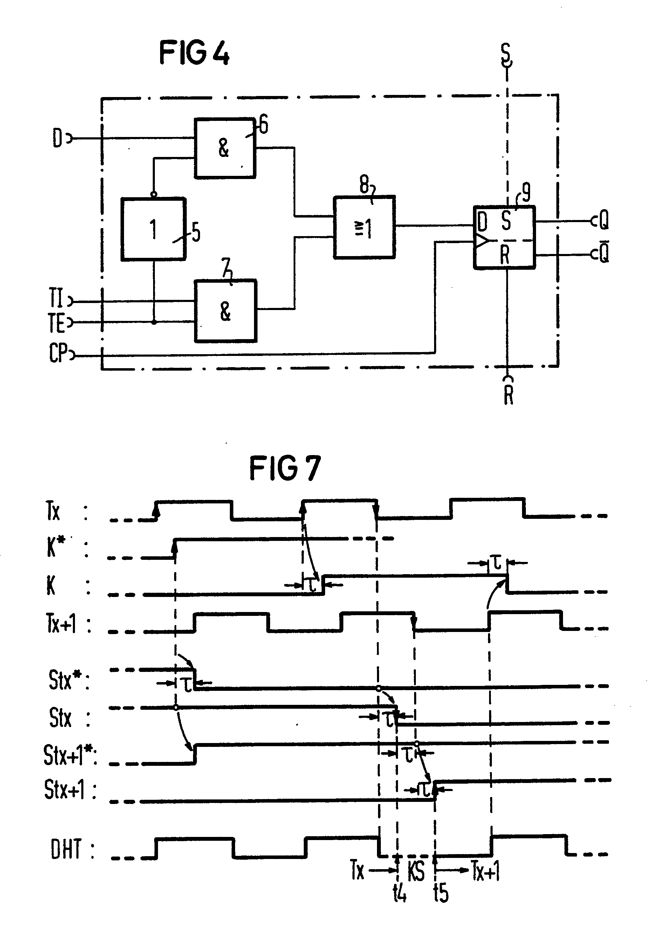

Fig. 4 zeigt das Schaltbild eines handelsüblichen D-Flipflops mit Testeingängen, wie es in den nachfolgenden Figuren verwendet wird. Es enthält einen Inverter 5, UND-Gatter 6 und 7, ein ODER-Gatter 8 und ein D-Flipflop 9. Die Anordnung enthält einen D-Eingang, einen Testeingang TI, einen Testfreigabeeingang TE, einen Takteingang CP, einen Rücksetzeingang R oder einen Setzeingang S, einen Q-Ausgang und einen $\overline{Q}$-Ausgang. Mit dem TE-Eingang kann die Aufnahmebereitschaft entweder des D-Eingangs oder des TI-Eingangs aktiviert werden.

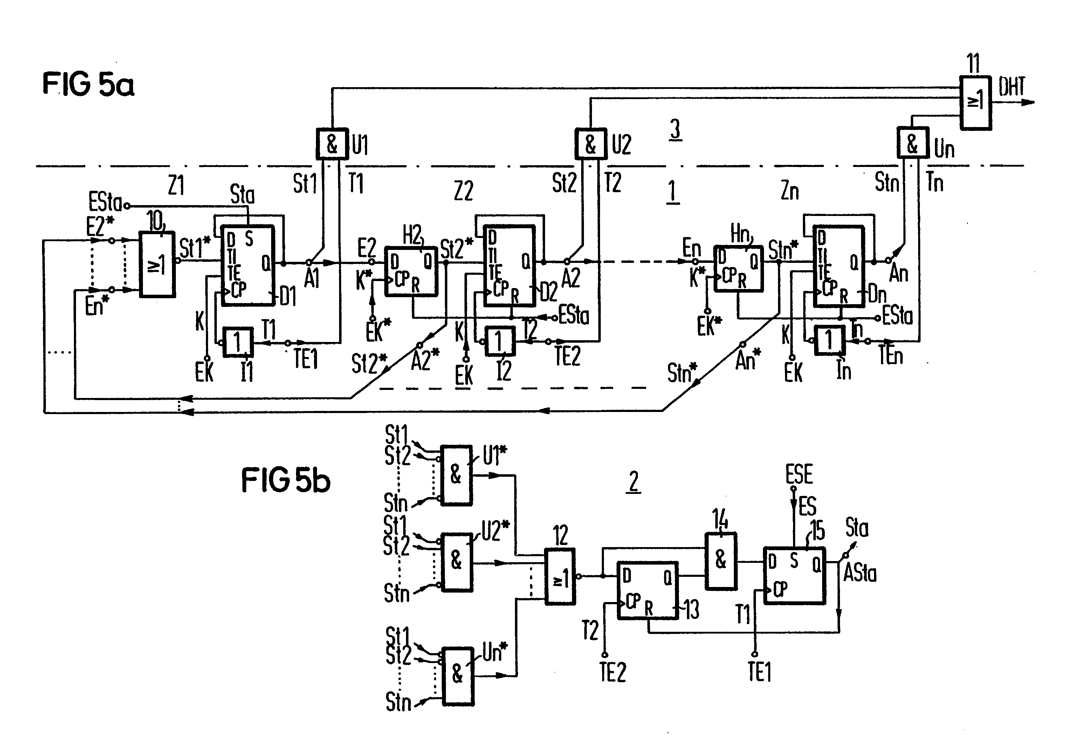

Die Fig. 5a und 5b zeigen die erfindungsgemäße Anordnung detailliert. Fig. 5a enthält die Steuerlogik 1 und den Taktselektor 3, die Fig. 5b die Taktüberwachung 2. Bestehen Bezugszeichen aus einem Großbuchstaben und einer Ziffer, dann gibt ersterer das Element und letztere die Ordnungszahl der Registerzelle bzw. des Steuersignals an, der oder dem das Element zugeordnet ist. x steht für eine beliebige Ziffer im Ordnungszahlbereich 1 bis n.

Die Steuerlogik 1 ist ein Schieberegister, das aus Registerzellen Z1 bis Zn besteht. Die Registerzelle Z1 enthält ein D-Flipflop D1 mit Testeingängen, einen Inverter I1 und ein NOR-Gatter 10. Die Registerzellen Z2 bis Zn enthalten jeweils ein D-Flipflop D2 bis Dn mit Testeingängen, einen Inverter I2 bis In und ein D-Flipflop H2 bis Hn.

Die D-Flipflops H2 bis Hn und das NOR-Gatter 10 dienen der Vorbereitung der Umschaltung und die D-Flipflops D1 bis Dn der eigentlichen Umschaltung.

Liegt an einem der D-Flipflops H2 bis Hn ein Steuersignal Stx im "H"-Zustand, dann wird dieser mit der nächsten positiven Flanke eines Vorkorrektursignals K* zum Q-Ausgang weitergegeben und erscheint dort als Vorsteuersignal Stx + 1*. Hat das Steuersignal Stn einen "H"-Zustand, dann weisen die Vorsteuersignale ST2* bis STn* erst nach der ansteigenden Flanke des Vorkorrektursignals K* einen "L"-Zustand auf, und am Ausgang des NOR-Gatters 10 erscheint ein Vorsteuersignal St1* im "H"-Zustand.

Durch einen "L"-Zustand des Korrektursignals K sind die D-Flipflops D1 bis Dn im D-Modus geschaltet und übernehmen durch die Q-D-Verbindung ihren eigenen Zustand von Taktperiode zur Taktperiode. Bei einem "H"-Zustand des Korrektursignals K werden die D-Flipflops D1 bis Dn in den Testmodus umgeschaltet. Im diesem übertragen sie einen den Vorsteuersignalen St1* bis Stn* entsprechenden logischen Zustand vom TI-Eingang zum Q-Ausgang, wenn eine negative Flanke des zugehörigen Taktes T1 bis Tn auftritt, und dadurch das Steuersignal St1 bis Stn gebildet wird.

Hat das Steuersignal Stx beim Eintreffen des Korrektursignals K den "H"-Zustand, dann entsteht in der Registerzelle Zx+1 das Steuersignal STx+1, wenn am Eingang des Inverters Ix+1 eine negative Flanke des Taktes Tx+1 auftritt. Da in der Registerzelle Zx die negative Flanke des Taktes Tx bereits früher (1/n der Periode) auftrat, wurde das Steuersignal Stx auch bereits vorher abgeschaltet.

Der Taktselektor 3 enthält UND-Gatter U1 bis Un und ein ODER- Gatter 11. Tritt jetzt allein das Steuersignal Stx+1 auf, dann schaltet das UND-Gatter Ux+1 den Takt Tx+1 zum ODER-Gatter 11 durch, an dessen Ausgang der erneut durchgeschaltete Takt als Daten-Hilfstakt DHT bezeichnet wird.

Fig. 5b zeigt die Taktüberwachung 2. Diese enthält UND-Gatter U1* bis Un*, ein NOR-Gatter 12, D-Flipflops 13 und 15 sowie ein UND-Gatter 14.

Die UND-Gatter U1* bis Un* und das NOR-Gatter 12 bilden einen Decoder für nicht erlaubte Steuersignalzustände. Bei jedem der UND-Gatter U1* bis Un* wird demnach das Steuersignal gleicher Ordnungszahl an einen nichtinvertierenden Eingang angelegt, während alle anderen Steuersignale mit einem invertierenden Eingang verbunden werden. Dadurch wird das Steuersignal Stx durchgeschaltet, wenn alle anderen Steuersignale im "L"-Zustand sind. Haben auf Grund einer Störung aber einmal alle Steuersignale St1 bis Stn einen "L"-Zustand oder mehrfach den "H"-Zustand, dann entsteht am Ausgang des NOR-Gatters 12 ein "H"-Zustand. Dieser wird mit der positiven Flanke des Taktes T2 in das D-Flipflop 13 eingelesen, dessen Q-Ausgang in einen "H"-Zustand übergeht. Das UND-Gatter 14 verknüpft den D-Eingang und den Q-Ausgang des D-Flipflops 13. Sind beide Signale im "H"-Zustand, dann erhält der D-Eingang des Flipflops 15 denselben Zustand. Mit der positiven Flanke des Taktes T1 wird dieser vom D-Flipflop 15 übernommen und es entsteht an dessen Ausgang ein "H"-Zustand, der ein aktives Startsignal Sta bedeutet. Mit diesem Startsignal Sta werden alle D-Flipflops H2 bis Hn und D2 bis Dn zurückgesetzt und wird das D-Flipflop D1 gesetzt.

Über den Setzeingang S des D-Flipflops 15 kann durch ein Einstellsignal ES für einen Test das Startsignal Sta jederzeit aktiviert und der Ausgangszustand der Steuerlogik 1 hergestellt werden.

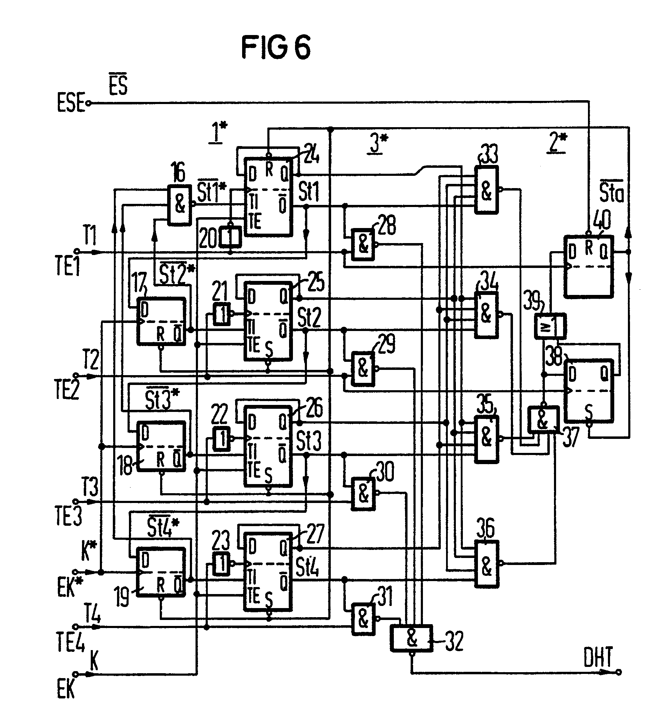

Fig. 6 zeigt ein Ausführungsbeispiel der Erfindung in integrierter CMOS-Technologie für vier Takte T1 bis T4. Eine Steuerlogik 1* enthält ein NAND-Gatter 16, D-Flipflops 17 bis 19, Inverter 20 bis 23 und D-Flipflops 24 bis 27 mit Testeingängen. Die Taktüberwachung 2* enthält NAND-Gatter 33 bis 37, D-Flipflops 38 und 40 sowie ein ODER-Gatter 39 und der Taktselektor 3* enthält NAND-Gatter 28 bis 32.

In integrierter Schaltkreistechnik werden aus Geschwindigkeitsgründen die schnellere Gatterart und bei D-Flipflops teils $\overline{Q}$-Ausgänge teils Q-Ausgänge bevorzugt. Durch Logikwechsel lassen sich ODER-Gatter gegen NAND-Gatter, UND-Gatter gegen NOR-Gatter und Q-Ausgänge gegen $\overline{Q}$-Ausgänge austauschen. Ferner finden Logikwechsel aufgrund unterschiedlicher Flankensteilheiten bei den Zustandswechseln vom "L"- in den "H"-Zustand und umgekehrt bei verschiedenen integrierten Elementen statt.

Das Ausführungsbeispiel nach Fig. 6 ist gegenüber dem nach den Fig. 5a und 5b entsprechend modifiziert.

Bei den D-Flipflops 17 bis 19 wird im Gegensatz zu den D-Flipflops H2 bis Hn der $\overline{Q}$-Ausgang benützt. Das NOR-Gatter-10 ist durch ein NAND-Gatter 16 ersetzt. Bei den D-Flipflops 24 bis 27 werden im Gegensatz zu den D-Flipflops D1 bis Dn sowohl der Q- als auch der $\overline{Q}$-Ausgang verwendet. Der Taktselektor 3* und der Decoderteil 33 bis 37 der Taktüberwachung 2* arbeiten mit NAND-Gattern. Bei den D-Flipflops sind gegenüber dem bisherigen Rücksetz- und Setzeingang vertauscht und an die Stelle des UND-Gatters 14 tritt ein ODER-Gatter 39. Von den Logikwechseln abgesehen ist die Funktion unverändert.

Der Pulsplan nach Fig. 7 demonstriert eine Umschaltung bei der Anordnung nach Fig. 6 von einem Takt Tx auf einen Takt Tx+1. Dabei sind interne Laufzeiten berücksichtigt, die der Einfachheit halber hier als gleich angenommen sind. Bis zum Zeitpunkt t1 dient der Takt Tx als Daten-Hilfstakt DHT. Bereits vorher tritt ein Vorkorrektursignal K* auf, das unter Berücksichtigung der Laufzeit der D-Flipflops 17 bis 19 früher als das Korrektursignal K kommt (im Impulsdiagramm kommt es jedoch zu Tx synchron eine Periode früher), das das Vorsteuersignal Stx* abschaltet und das das Vorsteuersignal Stx+1* einschaltet. Danach tritt das Korrektursignal K auf, das verursacht, daß bei der nächsten abfallenden Flanke des Taktes Tx das Steuersignal Stx zum Zeitpunkt t4 abgeschaltet wird und daß mit der nächsten abfallenden Flanke des Taktes Tx + 1 das Steuersignal STx + 1 zum Zeitpunkt t5 eingeschaltet wird. Ab diesem Zeitpunkt dient der Takt Tx + 1 als Daten-Hilfstakt DHT. Der Zeitraum zwischen den Zeitpunkten t4 und t5 beinhaltet den Korrekturschritt KS von 1/n UI = 0,25 UI. Die Laufzeit $\tau$ zwischen der letzten abfallenden Flanke des Taktes Tx und dem Zeitpunkt t4 hat solange keinen Einfluß auf den Daten-Hilfstakt DHT, bis der Zeitpunkt t4 auf die nächste ansteigende Flanke des Taktes Tx trifft.

Das Vorkorrektursignal K* und das Korrektursignal K werden in einem nicht zur Erfindung gehörenden und nicht dargestellten Phasendetektor durch den Daten-Hilfstakt DHT synchron erzeugt.

**Ansprüche**

1. Anordnung in integrierter Schaltkreistechnik zur Umschaltung eines Taktes (Tx) aus n untereinander gleichen Phasenabstand und gleiche Frequenz aufweisenden Takten (T1 bis Tn) auf einen Takt (Tx + 1) nacheilender Taktphase mit einem Taktselektor (3), mit einer aus einem von einem Korrektursignal (K) getakteten Schieberegister aus n Registerzellen (Z1 bis Zn) bestehenden Steuerlogik (1) und mit einer Taktüberwachung (2),
**dadurch gekennzeichnet,**
daß in der ersten Registerzelle (Z1) ein Haupt-D-Flipflop (D1) mit Test- (TI) und Testfreigabeeingang (TE) vorgesehen ist, dessen D-Eingang und dessen Q-Ausgang mit einem Registerzellenausgang (A1), dessen Takteingang (CP) über einen Inverter (I1) mit einem Registerzellen-Takteingang (TE1) für einen ersten Takt (T1), dessen Setzeingang (S) mit einem Startsignaleingang (ESta) für ein Startsignal (Sta) und dessen Testfreigabeeingang (TE) mit einem Korrektursignaleingang (EK) für ein Korrektursignal (K) verbunden sind, und dessen Testeingang (TI) ein NAND-Gatter (10) vorgeschaltet ist, dessen n-1 Eingänge jeweils mit einem Vorsteuersignaleingang (E2* bis En*) für ein Vorsteuersignal (ST2* bis Stn*) verbunden sind,
daß in der zweiten bis n-ten Registerzelle (Z2 bis Zn) jeweils ein Haupt-D-Flipflop (D2 bis Dn) mit Test-(TI) und Testfreigabeeingängen (TE) vorgesehen ist, dessen D-Eingang und dessen Q-Ausgang mit einem Registerzellenausgang (A2 bis An), dessen Takteingang (CP) über einen Inverter (I2 bis In) mit einem Registerzellen-Takteingang (TE2 bis TEn) für weitere Takte (T2 bis Tn), dessen Rücksetzeingang (R) mit einem Startsignaleingang (ESta), dessen Testfreigabeeingang (TE) mit einem Korrektursignaleingang (EK) und dessen Testeingang (TI) mit einem Vorsteuersignalausgang (A2* bis An*) verbunden sind, daß in der zweiten bis n-ten Registerzelle (Z2 bis Zn) ferner jeweils ein Hilfs-D-Flipflop (H2 bis Hn) vorgesehen ist, dessen D-Eingang mit einem Registerzelleneingang (E2 bis En), dessen Takteingang (CP) mit einem Vorkorrektursignaleingang (EK*) für ein Vorkorrektursignal (K*), dessen Rücksetzeingang (R) mit dem Startsignaleingang (ESta) und dessen Q-Ausgang mit dem Testeingang (TI) des zugehörigen Haupt-D-Flipflops (D2 bis Dn) verbunden sind,
daß jeder Registerzellenausgang (A1 bis An-1) mit dem Registerzelleneingang (E2 bis En) der nachfolgenden Registerzelle verbunden ist,
daß die Vorsteuersignalausgänge (A2* bis An*) mit den Vorsteuersignaleingängen (E2* bis En*) verbunden sind, daß in der Taktüberwachung (2) eingangsseitig n UND-Gatter (U1* bis Un*) vorgesehen sind, deren einer nichtinvertierender Eingang mit dem Registerzellenausgang jeweils einer Registerzelle und deren andere invertierte Eingänge jeweils mit einem Registerzellenausgang aller anderen Registerzellen verbunden sind,
daß ein NOR-Gatter (12) vorgesehen ist, dessen Eingänge jeweils mit einem Ausgang aller UND-Gatter (U1* bis Un*) verbunden sind,
daß ein erstes Startsignal-D-Flipflop (13) vorgesehen ist, dessen D-Eingang mit dem Ausgang des NOR-Gatters (12) und dessen Takteingang mit dem zweiten Takteingang (TE2) verbunden sind,
daß ein weiteres UND-Gatter (14) vorgesehen ist, dessen erster Eingang mit dem Ausgang des NOR-Gatters (12) und dessen zweiter Eingang mit dem Q-Ausgang des ersten Startsignal-D-Flipflops (13) verbunden sind, und
daß ein zweites Startsignal-D-Flipflop (15) vorgesehen ist, dessen D-Eingang mit dem Ausgang des UND-Gatters (14), dessen Takteingang (CP) mit dem ersten Takteingang (TE1), dessen Setzeingang (S) mit einem Einstellsignaleingang (ESE) und dessen Q-Ausgang mit dem Rücksetzeingang (R) des ersten Startsignal-D-Flipflops (13) verbunden sind und als Startsignalausgang (ASta) dient.

2. Anordnung nach Anspruch 1,
**gekennzeichnet durch**
eine Realisierung als integrierte Schaltung in CMOS-Technologie.

3. Anordnung nach Anspruch 1 oder 2,
**gekennzeichnet durch**
ihre Anwendung in Systemen für Bitraten gleich oder größer 34 Mbit/s.

FIG 1

FIG 2

FIG 3

# FIG 4

# FIG 7

# FIG 5a

# FIG 5b

EP 0 369 047 A1

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 275 406 (SIEMENS)<br>* Spalte 1, Zeilen 28-36; Spalte 6, Zeilen 9-16,38-48 *<br>--- | 1-3 | H 04 L 7/02<br>H 04 L 7/033 |
| A | EP-A-0 187 504 (LOCKHEED ELECTRONICS CO.)<br>* Seite 4, Zeilen 10-24 *<br>----- | 1 | |

RECHERCHIERTE
SACHGEBIETE (Int. Cl.5)

H 04 L

Der vorliegende Recherchenbericht wurde für alle Patentansprüche erstellt

| Recherchenort | Abschlußdatum der Recherche | Prüfer |
|---|---|---|
| DEN HAAG | 12-07-1989 | VERSLYPE J.P. |